# EUROPÄISCHE PATENTANMELDUNG

(11) **EP 0 621 188 A2**
(43) Veröffentlichungstag der Anmeldung: **26.10.1994**
(21) Anmeldenummer: 94106330.7
(22) Anmeldetag: 22.04.1994
(51) Int. Cl.: B65D 81/26, B29C 51/08, B32B 27/12, B32B 31/00

(54) **Mehrschichtige Verpackungsschale für Lebensmittel und Verfahren zu ihrer Herstellung**

(30) Priorität: 23.04.1993 DE 4313146
(71) Anmelder: SILVER-PLASTICS GmbH & CO KG, D-53840 Troisdorf (DE)
(72) Erfinder: Metzer, Josef, D-47877 Willich (DE); Wirz, Peter, D-53721 Siegburg (DE)
(74) Vertreter: Müller-Gerbes, Margot, Dipl.-Ing.

(57) **Zusammenfassung**

Die Erfindung betrifft eine mehrschichtige Verpackungsschale mit haftfest miteinander verbundenen Schichten zur Aufnahme von Flüssigkeit absondernden Lebensmitteln mit einer die Außenseite (19) der Verpackungsschale (100) bildenden flüssigkeitsundurchlässigen Trägerschicht (10) aus Kunststoff, einer die Innenseite der Verpackungsschale (100) bildenden flüssigkeitsdurchlässig ausgebildeten Deckschicht (12) aus Kunststoff und einer zwischen der Trägerschicht (10) und der Deckschicht (12) gebildeten Einlage (11) mit einer auf der Trägerschicht aufgebrachten Schmelzkleberschicht (11a) und einer hierauf aufgebrachten Schicht aus feuchtigkeitsabsorbierenden Polymeren (11b) und einer Abdeckschicht (11c) aus einem Vlies sowie ein Verfahren zum Herstellen derartiger Verpackungsschalen.

## Beschreibung

Die Erfindung bezieht sich auf eine mehrschichtige Verpackungsschale mit haftfest miteinander verbundenen Schichten zur Aufnahme von Flüssigkeit absondernden Lebensmitteln mit einer die Außenseite der Verpackungsschale bildenden flüssigkeitsundurchlässigen Trägerschicht aus kompaktem oder geschäumtem Kunststoff, mit einer die Innenseite der Verpackungsschale bildenden zumindest in örtlich begrenzten Bereichen flüssigkeitsdurchlässig ausgebildeten Deckschicht aus Kunststoff und mit einer zwischen der Trägerschicht und der Deckschicht ausgebildeten flüssigkeitsabsorbierenden Einlage aus einem nichtgewebten Vlies aus Mikrofasern und/oder Endlosfilamenten aus thermoplastischem Kunststoff, enthaltend Superabsorber, wobei die flüssigkeitsabsorbierende Einlage nur einen Teil der Fläche der Trägerschicht bedeckt und mit der Trägerschicht und der Deckschicht haftfest verbunden ist. Die Erfindung umfaßt auch ein Verfahren zum Herstellen solcher mehrschichtiger Verpackungsschalen.

Verpackungsschalen der gattungsgemäßen Art sind beispielsweise aus der DE 4039 354 C2 bekannt, die zwei äußere Lagen aus einem flüssigkeitsundurchlässigen Material aus kompaktem oder geschäumtem Kunststoff und eine Zwischenlage aus einem flüssigkeitsabsorbierenden Material aufweisen, wobei die eine äußere obere dem Verpackungsgut zugewandte Lage mit Löchern versehen ist, durch welche die Flüssigkeiten in die absorbierende Zwischenlage gelangen. Als absorbierende Zwischenlage werden hierbei nichtgewebte Vliese aus Fasern und/oder Filamenten auf Basis des gleichen thermoplastischen Kunststoffes wie die äußeren flüssigkeitsundurchlässigen Lagen vorgesehen, wobei dieses nichtgewebte Vlies zusätzlich Superabsorber enthalten kann. Nachteilig bei dieser bekannten Verpackungsschale ist die Anordnung der absorbierenden Zwischenlage im gesamten Bereich zwischen den beiden äußeren die Verpackungsschale bildenden Lagen, wobei auch die Superabsorber, sofern sie vorhanden sind, über den ganzen Bereich der Schale verteilt angeordnet sind, obgleich sie nur im Bodenbereich, wo die Flüssigkeiten sich ansammeln, gebraucht werden.

Aus der DE-OS 3442 341 ist eine mehrschichtige Verpackungsschale bekannt geworden, bei der die beiden äußeren Lagen aus einer Schaumstoffolie aus Polystyrol bestehen, und die eine absorbierende Zwischenlage aus Papier aufweisen. Auch hier ist die obere äußere Lage gelocht, so daß Flüssigkeiten in die absorbierende Zwischenlage aus Papier gelangen können. Um einen haftfesten Verbund der mehrschichtigen Schale zu erhalten, ist die absorbierende Zwischenlage nur in einem Teilbereich zwischen den äußeren Lagen vorhanden, da das Papier nicht mit den Polystyrolschaumstoffolien ausreichend verklebt, so daß der Verbund in dem von der Zwischenlage freien Bereich erfolgen muß. Derartige Schalen haben auch den Nachteil, daß die Saugfähigkeit der Zwischenlage aus Papier sehr begrenzt ist, und soweit die Zwischenlage noch mit den anderen Lagen verschweißt ist, die Saugfähigkeit weiter reduziert wird.

In der EP 0495 230 A2 ist eine einschichtige Verpackungsschale aus Kunststoffschaumfolie vorgeschlagen, die zur Erhöhung der Saugfähigkeit und Aufnahmefähigkeit von aus Lebensmittel abgesonderten Flüssigkeiten mit einer zusätzlichen losen Einlage aus saugfähigem Papier oder Zellstoff ausgerüstet werden kann oder aber mit einem hoch feuchtigkeitsabsorbierenden Polymer als Saugfilter ausgerüstet werden kann. Hierbei wird das hoch feuchtigkeitsabsorbierende Polymer im Bodenbereich der Schale lose oder in einem Behälter untergebracht und gegebenenfalls mit einem losen zusätzlichen gelochten Einlegeboden abgedeckt. Diese einschichtige Verpackungsschale mit zusätzlich eingelegtem Saugfilter aus hoch feuchtigkeitsabsorbierenden Polymeren und zusätzlichem Einlegeboden ist sehr aufwendig in der Herstellung und entsprechend teuer.

Der Erfindung liegt die Aufgabe zugrunde, eine Verpackungsschale für Flüssigkeiten absondernde Lebensmittel zu schaffen, die bei hoher Absorptionfähigkeit und Retentionsfähigkeit wirtschaftlich in einem kontinuierlichen Prozeß herstellbar ist und die darüber hinaus auch die Möglichkeit des Recyclings sowohl des bei der Herstellung der Verpackungsschale anfallenden Abfalles als auch der Verpackungsschale selbst ermöglicht.

Diese Aufgabe wird bei einer gattungsgemäßen mehrschichtigen Verpackungsschale gemäß der Erfindung dadurch gelöst, daß die flüssigkeitsabsorbierende Einlage aus einer auf die Trägerschicht haftend aufgebrachten Schmelzkleberschicht aus Kunststoff, einer hierauf aufgebrachten und mit der Schmelzkleberschicht verklebten Schicht aus feuchtigkeitsabsorbierenden Polymeren in Partikelform mit einer Feuchtigkeitsaufnahme von mindestens 10 ml/g und dem hierauf als Abdeckschicht aufgebrachten nichtgewebten Vlies aus Mikrofasern und/oder Endlosfilamenten aus thermoplastischem Kunststoff besteht.

Erfindungsgemäß ist also bei einer mehrschichtigen Verpackungsschale eine Schicht nur aus feuchtigkeitsabsorbierenden Polymeren, die auch vielfältig als Superabsorber bezeichnet werden, zwischen den beiden äußeren Lagen innerhalb der Verpackungsschale im wesentlichen im Bodenbereich bzw. nur teilweise den Bodenbereich bedeckend vorgesehen. Damit wird der Einsatz von feuchtigkeitsabsorbierenden Polymeren im wesentlichen auf den Bereich, wo er benötigt wird, beschränkt, so daß der Einsatz der teueren Superabsorber auf das notwendige Maß beschränkt werden kann.

Erfindungsgemäß wird ein Verfahren zum Herstellen einer mehrschichtigen Verpackungsschale gemäß Anspruch 8 vorgeschlagen. Die kontinuierliche Fertigung der mehrschichtigen Verpackungsschale mit hoch feuchtigkeitsabsorbierenden Polymeren ist dadurch möglich, daß für die Haftung der feuchtigkeitsabsorbierenden Polymere zusätzlich eine Schmelzkleberschicht zwischen der Lage von feuchtigkeitsabsorbierenden Polymeren und der Trägerschicht, d.h. der unteren äußeren Schicht der Verpackungsschale vorgesehen ist. Der Schmelzkleber für die Schmelzkleberschicht ist so auszuwählen, daß er eine gute Haftung zu der Trägerschicht und den angrenzenden Abdeckschichten bzw. Deckschicht ermöglicht, während die feuchtigkeitsabsorbierenden Polymere auf der plastifizierten Oberfläche anhaften. Insbesondere ist es möglich, die feuchtigkeitsabsorbierenden Polymere in Pulverform oder Granulatform in einem rieselfähigen Zustand unmittelbar auf diese Schmelzkleberschicht aufzustreuen. Die Menge der feuchtigkeitsabsorbierenden Polymere pro Schale richtet sich nach der gewünschten Flüssigkeitsaufnahme der Schale und der Saugfähigkeit, d.h. Absorptionsfähigkeit und Retentionsfähigkeit der eingesetzten feuchtigkeitsabsorbierenden Polymere. Die Dosierung der pro Schale benötigten feuchtigkeitsabsorbierenden Polymere ist sehr einfach, wobei die auf der Schmelzkleberschicht aufzubringende Lage von feuchtigkeitsabsorbierenden Polymeren diese nicht vollständig zu bedecken braucht.

Vorteilhafte Ausgestaltungen der mehrschichtigen Verpackungsschale gemäß der Erfindung sind den kennzeichnenden Merkmalen der Unteransprüche entnehmbar.

Überraschend wurde festgestellt, daß der Schmelzkleber die Feuchtigkeitsaufnahme nur unwesentlich beeinträchtigt.

Damit bei Feuchtigkeitsaufnahme die aufquellenden Polymere nicht durch die Öffnungen der Deckschicht in Berührung mit den Lebensmitteln gelangen, ist die Abdeckschicht aus einem feinen dünnen flüssigkeitsundurchlässigen Vlies vorgesehen. Das Vlies kann hierbei ein Flächengewicht von 15-50 g/m² aufweisen.

Für die Deckschichten und die Trägerschichten und die Abdeckschichten der Verpackungsschalen werden bevorzugt jeweils die gleichen Kunststoffe eingesetzt, vorzugsweise Polystyrol, jedoch haben sich auch Polyolefine, wie Polypropylen, bewährt. Als Trägerschicht wird bevorzugt eine Schaumstoffolie eingesetzt. Als Deckschicht kommen kompakte Kunststoffolien oder geschäumte Kunststoffolien infrage, die gelocht sind, um das Eindringen der im Bodenbereich der Schale angesammelten Flüssigkeit in die feuchtigkeitsabsorbierende Einlage zu ermöglichen. Darüber hinaus kann die Verpackungsschale nicht nur mit einem seitlich hochstehenden Rand ausgebildet sein, sondern zusätzlich im Bodenbereich profiliert sein, so daß die Flüssigkeiten sich im wesentlichen zur Bodenmitte hin ansammeln. Bevorzugt sind Deckschicht und Trägerschicht aus Polystyrol gefertigt, wobei zumindest die Trägerschicht geschäumt ist.

Als feuchtigkeitsabsorbierende Polymere für die Einlage kommen insbesondere die thermoplastisch verarbeitbaren Biopolymere und/oder chemisch modifizierten Biopolymere und/oder synthetischen Polymere mit einer Feuchtigkeitsaufnahme von mindestens 10 ml/g infrage. Bevorzugt werden Polymere eingesetzt, die eine Feuchtigkeitsaufnahme von mehr als 25 ml/g aufweisen. Geeignete feuchtigkeitsabsorbierende Polymere sind beispielsweise Gummi arabicum, Gelatine, Alkalialginate sowie vernetzte Polyacrylsäuren, wie vernetzte Copolymerisate von Acrylsäuren mit bi- und polyfunktionellen Monomeren bzw. durch partielle Vernetzung mit mehrwertigen Ionen erhaltene vernetzte Polyacrylsäuren oder Polyacrylate, bevorzugt die Alkalimetallsalze der Polyacrylsäuren, wie die Natriumsalze dieser Verbindungen oder die Pfropfcopolymere der Stärke, wie Stärke-Acrylamid-Acrylsäure-Pfropfcopolymere oder Polyacrylamide, wie durch Copolymerisation von Acrylamiden mit mehrfunktionellen Monomeren erhaltene wasserunlösliche Polymere. Diese Polymere werden vielfach auch als Superabsorber bezeichnet. Auch Hydroximethylzellulose, die thermoplastisch verarbeitbar ist, ist für die Erfindung einsetzbar. Bevorzugt werden feuchtigkeitsabsorbierende Polymere, die wasserunlöslich sind und die lebensmittelrechtlich für den Einsatz in Verpackungsschalen zugelassen sind. Diese feuchtigkeitsabsorbierenden Polymere werden bevorzugt in Form von Granulaten oder Pulver eingesetzt, die vorzugsweise rieselfähig sind.

Darüber hinaus ist es möglich, der Einlage bzw. den feuchtigkeitsabsorbierenden Polymeren zusätzlich geringe Mengen an Bakteriostatika zuzugeben, das sind Substanzen, die Bakterien hemmen oder verhindern.

Zum Anhaften und Aufbringen der feuchtigkeitsabsorbierenden Polymere als Einlage zwischen die Deckschicht und Trägerschicht der Verpackungsschale sind erfindungsgemäß Schmelzklebstoffe, bei Raumtemperatur feste, wasser- und lösungsmittelfreie Klebstoffe vorgesehen, die auf die miteinander zu verklebenden Teile aus der Schmelze aufgetragen werden und nach dem Zusammenfügen beim Abkühlen unter Verfestigung physikalisch abbinden bzw. durch erneute Wärmezufuhr plastifiziert und in den klebrigen Zustand überführt werden und dann beim Abkühlen wiederum unter Verfestigung physikalisch abbinden. Insbesondere werden für die vorliegende Erfindung für den Lebensmittelbereich zugelassene physikalisch abbindende Kunststoffe auf Basis Styrolbutadien-Copolymer, Ethylenvinylacetat-Copolymer, Polyvinylacetat und Polyester vorgeschlagen, die jeweils zu dem Kunststoff der Verpackungsschale, d.h. der Trägerschicht und der Deckschicht eine gute Haftung erbringen. Bevorzugt werden Copolyester aliphatischer Diole oder Glykole oder Etheralkohole aromatischer und/oder aliphatischer Dicarbonsäuren, wie Adipinsäuren, Sebacinsäuren, Phthalsäuren, Terephthalsäuren mit niedriger Schmelzetemperatur vorgeschlagen. Bevorzugt werden Schmelzkleber mit einer Schmelztemperatur unter 150°C eingesetzt, zum Beispiel Mischpolyester. Die Schmelzkleberschicht wird nur in geringer Dicke aufgetragen, vorzugsweise aufextrudiert, wobei noch in die extrusionswarme Schmelzkleberschicht die feuchtigkeitsabsorbierenden Polymere aufgestreut werden können und anhaften oder gegebenenfalls nach dem Auftragen des extrudierten Schmelzkleberstranges zusätzlich eine oberflächliche Erwärmung desselben vorgenommen wird, um nachfolgend die feuchtigkeitsabsorbierenden Polymere aufzustreuen. Es ist aber auch möglich, den Schmelzkleber als Granulat oder in Pulverform in Streubeschichtung aufzubringen und anschließend durch Zufuhr von Wärme zu plastifizieren und dann entweder danach oder auch noch vor der Erwärmung die feuchtigkeitsabsorbierenden Polymere als Pulver oder Granulat auf die Schmelzkleberschicht aufzustreuen. Die Schmelzkleberschicht sollte eine Schichtdicke entsprechend einem Auftrag von 20 bis 100 g/m² aufweisen.

Die Herstellung der erfindungsgemäßen Verpackungsschale erfolgt in Anlehnung an das bereits in der DE 4039 354 C2 beschriebene Verfahren. Der haftfeste Verbund zwischen den verschiedenen Schichten, die die Verpackungsschale bilden, wird erfindungsgemäß zum einen über die thermoplastischen Kunststoffe der Deckschicht und Abdeckschicht und der Trägerschicht in den Bereichen, in denen sie aneinanderliegen bewirkt, zum anderen über die Schmelzkleberschicht, wobei bei dem Herstellen durch Warmverformung bzw. im Tiefziehverfahren oder Vakuumformverfahren der Verpackunsschale auch die einzelnen Schichten miteinander verkleben bzw. verschweißen. Hierbei ist überraschend, daß die Schmelzkleberschicht die Feuchtigkeitsaufnahme der absorbierenden Polymere nur unwesentlich beeinträchtigt, dennoch ein ausreichender Verbund der Schichten der Verpackungsschale erreichbar ist.

Vorteilhafte Ausgestaltungen des erfindungsgemäßen Verfahrens sind den Unteransprüchen entnehmbar. Je nach Wahl der Werkstoffe kann das Herstellen der mehrschichtigen Verpackungsschale nach unterschiedlichen Verfahrensmerkmalen erfolgen, wobei jedoch immer ein kontinuierliches Herstellungsverfahren unter Einsatz von endlosen Bahnen für die Trägerschichten und die Deckschichten, sowie fortlaufend hergestellter Schmelzkleberschichten und fortlaufend aufgebrachter feuchtigkeitsabsorbierender Polymere ermöglicht wird. Vor dem Zusammenführen der die jeweiligen Schichten, wie Trägerschicht oder Deckschicht, Einlage mit der Schmelzkleberschicht und Abdeckschicht bildenden Bahnen können diese und/oder die Schmelzkleberschicht oberflächlich erwärmt und anplastifiziert werden, so daß sie beim nachfolgenden Zusammenführen und Andrücken gut aneinander haften. Es ist möglich, die einzelnen Schichten für die Verpackungsschale nacheinander zusammenzuführen und hieraus eine Mehrschichtbahn zu bilden, die nachfolgend zu der Verpackungsschale geformt wird. Es ist auch möglich, die Schichten gleichzeitig in einen Walzenspalt einlaufen zu lassen, wobei die Trägerschicht und die Deckschicht zusammen mit der Abdeckschicht die äußeren Bahnen bilden, die Schmelzkleberschicht im plastifizierten Zustand direkt in den Walzenspalt extrudiert und die feuchtigkeitsabsorbierenden Polymere hierauf in den Walzenspalt eingestreut werden.

Um ein gutes Anhaften der feuchtigkeitsabsorbierenden Partikel zu erreichen, ist die Schmelzkleberschicht vor dem Aufstreuen der Partikel oberflächlich bis zur Plastifizierung zu erwärmen, so daß die dann aufgestreuten Polymer-Partikelchen leicht angepreßt werden und dauerhaft anhaften. Es ist auch möglich, die feuchtigkeitsabsorbierenden Polymer-Partikelchen vor dem Aufstreuen auf die Schmelzkleberschicht zur Verbesserung des Anhaftens zu erwärmen.

Bei dem Nacheinanderaufbringen der Schichten, insbesondere beim Aufstreuen der feuchtigkeitsabsorbierenden Polymere auf die Schmelzkleberschicht, ist es auch möglich, nach dem Anpressen der feuchtigkeitsabsorbierenden Polymere auf bzw. in die Schmelzkleberschicht, die nicht anhaftenden überschüssigen Polymerpartikelchen wieder abzusaugen und damit erneut dem Prozeß zuzuführen.

Auch die Deckschichtbahn is vor dem Zusammenführen mit den anderen Schichten an der Verbindungsseite zu erwärmen und oberflächlich zu plastifizieren, um einen haftfesten Verbund zu erreichen.

Sofern man nicht unmittelbar den Schmelzkleber als Streifen oder Band auf die Trägerschicht aufextrudiert, ist es auch möglich, ein Schmelzklebeband als Folienband herzustellen, auf die Trägerschicht aufzulegen und durch Plastifizierung und nachfolgende Verpressung mit der Trägerschicht zu verbinden. Eine bevorzugte Ausführung der erfindungsgemäßen mehrschichtigen Verpackungsschale und ihre Herstellung ist den kennzeichnenden Merkmalen des Anspruches 12 entnehmbar.

Bei Verpackungsschalen von üblichen Abmessungen von beispielsweise etwa 13 bis 14 cm Breite und 18 cm Länge und einer Höhe von ca. 2 cm auf Basis von Polystyrolschaumfolien und Polystyroldeckschichten ist eine Schmelzkleberschicht einer Breite von ca. 3 bis 6 cm erforderlich, die in Längserstreckung der Verpackungsschale durchläuft und auf der anhaftend die feuchtigkeitsabsorbierenden Polymere in Partikelform - Granulat oder Pulver - aufgebracht sind. Die Menge an feuchtigkeitsabsorbierenden Polymeren errechnet sich aus der gewünschten Flüssigkeitsaufnahmefähigkeit der Schale sowie der Flüssigkeitsaufnahmefähigkeit der eingesetzten Polymere. Setzt man beispielsweise ein feuchtigkeitsabsorbierendes Polymer ein, das 60 ml/g Feuchtigkeit aufzunehmen vermag, so kann hieraus die gewünschte Menge berechnet werden, zum Beispiel 2 g absorbierende Polymere für eine gewünschte Flüssigkeitsaufnahme von 120 ml/Schale. Selbst wenn nur die Hälfte der absorbierenden Polymere in einer Schale bei Bedarf aktiviert werden, ermöglichen diese noch eine Flüssigkeitsaufnahme von 60 ml je Schale.

Die Erfindung wird nachfolgend anhand der Zeichnung beispielhaft näher erläutert.

Es zeigen
- Figur 1: eine Verpackungsschale in Draufsicht
- Figur 2a,b: zwei verschiedene Varianten der Ausbildung der Verpackungsschale nach Fig. 1 im Querschnitt AA
- Figur 3: schematische Darstellung der Herstellung der Verpackungsschale in Aufsicht auf die verschiedenen Materialschichten
- Figur 4,5,6: schematische Ansichten von verschiedenen Anlagen zum Herstellen der Verpackungsschalen gemäß den Figuren 1 bis 3.

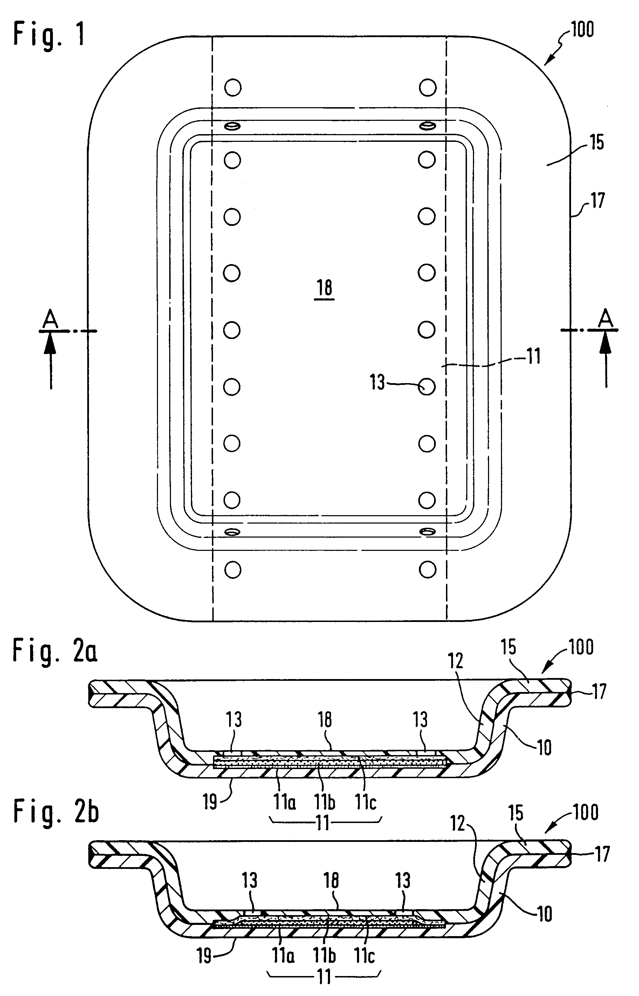

Figur 1 zeigt die Verpackungsschale 100 mit flachem Bodenbereich 18, umlaufendem hochstehendem Rand 15 mit Randkante 17 in etwa rechteckiger Grundform, die zur Aufnahme von Lebensmitteln, wie Fleisch, Geflügel oder dergleichen, bestimmt ist. In einer Erstreckungsrichtung enthält die Verpackungsschale die streifenförmige durchgehende Einlage 11 zur Aufnahme von Flüssigkeiten, abgesondert aus den Lebensmitteln.

Figur 2a zeigt den Querschnitt AA der Verpackungsschale nach Figur 1, die mehrschichtig aufgebaut ist. Die Trägerschicht 10, beispielsweise eine Polystyrolschaumfolie bildet die Außenseite 19 der Verpackungsschale 100, die Deckschicht 12 bildet die dem Verpackungsgut zugewandte Innenseite der Verpackungsschale. Zwischen den beiden äußeren Schichten 10, 12 ist im Bodenbereich 18 in Längserstreckung der Verpackungsschale durchlaufend eine Einlage 11 angeordnet, die aus einer auf der Trägerschicht 10 haftfest aufgebrachten Schmelzkleberschicht 11a, einer hierauf aufgebrachten Schicht aus Granulat oder Pulver von feuchtigkeitsabsorbierenden Polymeren 11b, wie Superabsorbern, und einer diese Polymere abdeckenden Abdeckschicht 11c aus einem dünnen Vlies aus thermoplastischen Fasern besteht. Sofern die Deckschichtfolie 12 flüssigkeitsundurchlässig aus kompakter Polystyrolfolie oder geschäumter Polystyrolfolie besteht, ist diese im Bereich zugeordnet zu der Einlage 11 mit Löchern 13 versehen, so daß Flüssigkeit der Schale zu der Schicht von feuchtigkeitsabsorbierenden Polymeren 11b gelangen kann. Es ist auch möglich, die Schale 100 gemäß Figur 1 und 2 so auszubilden, daß die Einlage 11 mit Schmelzkleberschicht 11a und der hierauf aufgebrachten Schicht von feuchtigkeitsabsorbierenden Polymeren 11b und der Abdeckschicht 11c parallel zur kurzen Seite der Verpackungsschale verläuft, wenn dieses der Fertigungsrichtung entspricht. Die Verpackungsschale 100 kann auch eine runde oder ovale Form aufweisen. Auch hierbei kann die Einlage 11 in Streifenform in einer Achsrichtung mit einer Breite, die schmaler als die Breite der Verpackungsschale ist, durchlaufend ausgebildet sein.

In der Figur 2b ist als Variante der Querschnitt der Verpackungsschale 100 nach Figur 1 dargestellt, wobei die auf der Schmelzkleberschicht 11a aufgebrachte Schicht aus feuchtigkeitsabsorbierenden Polymeren 11b nur einen Teil der Kleberschicht 11a bedeckt und beidseitig in Fertigungsrichtung Randstreifen frei läßt, die dem Verkleben mit der Deckschicht 12 bzw. der Abdeckschicht 11c dienen.

Die einzelnen Schichten der in den vorangehenden Figuren 1 bis 2b erläuterten Verpackungsschalen werden spätestens durch das im erwärmten Zustand erfolgende Verformen der Materialschichten zu der Verpackungsschale soweit haftfest untereinander verbunden, daß eine gut handhabbare mehrschichtige Verpackungsschale entsteht. Zusätzlich kann im Randbereich der Verpackungsschale beim Ausschneiden aus der Mehrschichtenbahn mittels heißer Messer ein Randverschweißen erfolgen, wie durch die Randkante angedeutet.

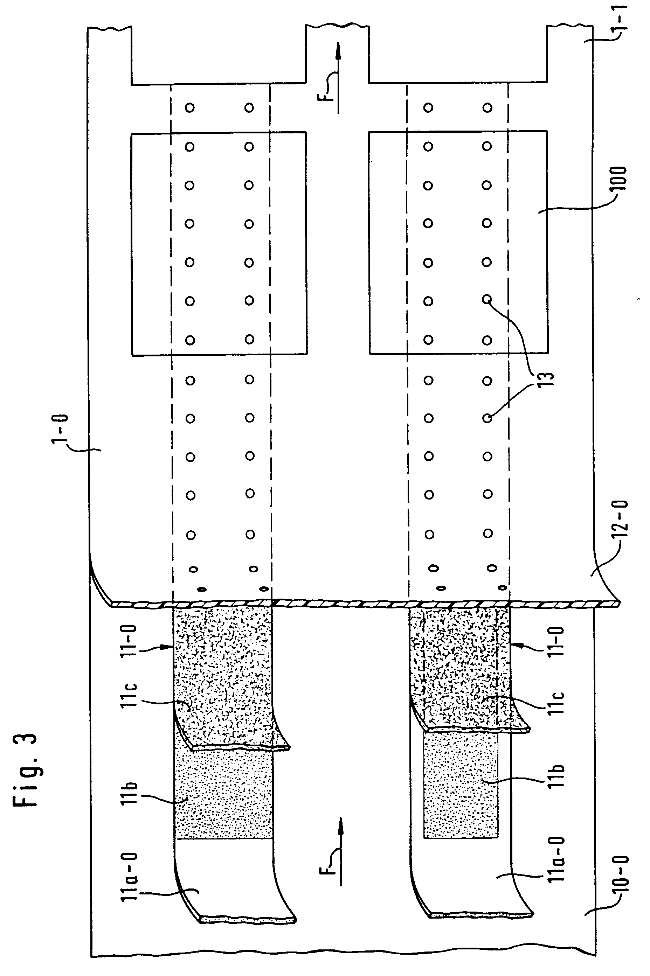

In der Figur 3 ist schematisch in der Aufsicht das Herstellen der Verpackungsschale durch Zusammenführen der einzelnen Materialbahnen durch Tiefziehen dargestellt. Für die äußere Trägerschicht wird in Fertigungsrichtung F eine Trägerschichtbahn 10-0, beispielsweise eine Schaumfolie aus Polystyrol zugeführt, auf die eine Schmelzkleberschicht fortlaufend als Streifen 11a-0 im plastifizierten Zustand extrudiert wird. Bei Herstellung von mehreren Verpackungsschalen nebeneinander aus einer Trägerschichtbahn 10-0 werden entsprechend der Anzahl von Verpackungsschalen eine entsprechende Anzahl von Schmelzkleberstreifen 11a-0 in den erforderlichen Abständen und gewünschten Breiten und Dicken auf die Trägerschichtbahn aufgebracht. Auf die Schmelzkleberschicht 11a-0 wird anschließend das feuchtigkeitsabsorbierende Polymer 11b in Pulver- oder Granulatform fortlaufend in der gewünschten Menge aufgestreut, wobei die Schmelzkleberschicht 11a im plastifizierten Zustand ist, so daß die Granulate bzw. Pulver anhaften, wobei sie zusätzlich angepreßt werden. Auf diese Weise wird kontinuierlich der die spätere Einlage bildende Einlagestreifen 11-0 hergestellt. Die Polymerschicht 11b kann auch die ganze Breite des Schmelzkleberstreifens oder auch nur den mittleren Bereich unter Freilassen von seitlichen Randstreifen bedecken, wie schematisch in Figur 3 dargestellt.

Für Lebensmittelverpackungen geeignete und zulässige feuchtigkeitsabsorbierende Polymere werden handelsüblich angeboten, beispielsweise die in der EP-0495 230 A2 aufgeführten oder zum Beispiel von der Chemische Fabrik Stockhausen, BRD, unter der Handelsbezeichnung "Favor (R) - PCA 300" angebotene Pulver auf Basis von Natriumsalzen von vernetzten Polyacrylsäuren, die einen Absorptionswert von 60 g einer 0,2 %igen NaCl-Lösung auf 1 g Polymer haben. Auf die Polymerschicht 11b wird zur Abdeckung ein Vlies in Streifenform, gegebenfalls auch den Schmelzkleberstreifen überlappend, um einen besseren Verbund zu ermöglichen, siehe Figur 3, aufgebracht.

Anschließend wird die Deckschicht 12 in Gestalt einer endlosen Deckschichtbahn 12-0, die mit Löchern 13 versehen ist über die Trägerschichtbahn und die Einlagestreifen 11 aufgebracht und nach weiterer Erwärmung bis in den plastischen Zustand die Verpackungsschalen 100 durch entsprechende Verformung der Mehrschichtenbahn 1-0 hergestellt und ausgestanzt. Hierbei bilden alle Schichten aus thermoplastischen Kunststoffen einen haftfesten Verbund. Das verbleibende Gitter 1-1 wird dem Recycling zugeführt und nach Entfernung der Superabsorber und gegebenenfalls des Schmelzklebers wieder dem Herstellungsprozeß zum Herstellen von Trägerschichtbahnen beispielweise zugeführt.

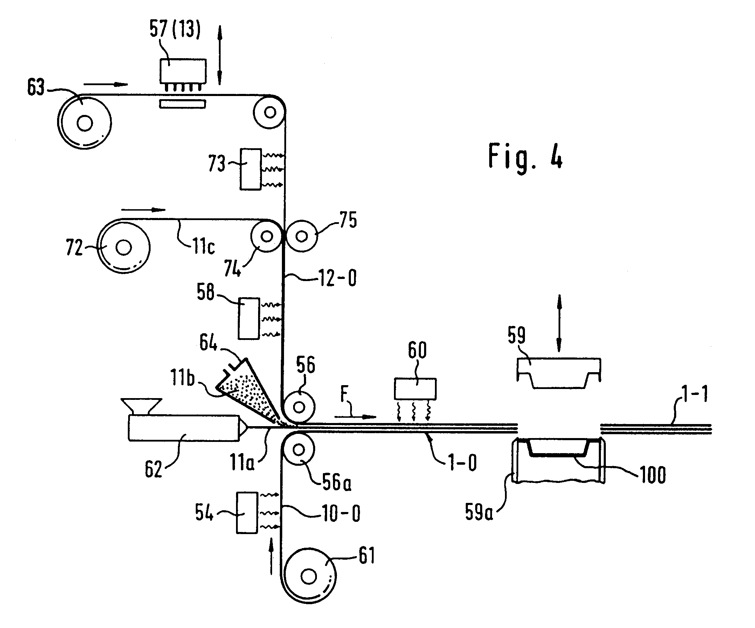

In der Figur 4 ist eine Verfahrensweise zum Herstellen der mehrschichtigen Verpackungsschale gemäß der Erfindung dargestellt, bei der die einzelnen Schichten gleichzeitig zusammengeführt werden. Hierzu ist ein von einem Walzenpaar 56, 56a gebildeter Walzenspalt vorgesehen, wobei die die Trägerschicht bildende Bahn 10-0 von einer Vorratsrolle 61 in Pfeilrichtung abgezogen und der Walze 56a zugeführt wird. Auf diesem Wege kann die Trägerschichtbahn 10-0 auf ihrer Verbindungsseite gegebenenfalls zusätzlich mittels Infrarotstrahler 54 vorgewärmt werden. Die Deckschichtbahn 12 wird von einer Vorratsrolle 63 in Pfeilrichtung abgezogen und mittels einer Locheinrichtung 57 gelocht und auf dem Weg zur Walze 56 mit dem die Abdeckschicht 11c bildenden von einer Vorratsrolle 72 abgezogenen Vliesstreifen mittels des Walzenpaares 74, 75 zusammengeführt, wobei sie ebenfalls auf ihrer Verbindungsseite noch vor dem Einlaufen in den Walzenspalt und vor dem Verbinden mit der Abdeckschicht 11c mittels IR-Strahler 58, 73 erwärmt und plastifiziert werden kann.

Unmittelbar in den zwischen den Walzen 56, 56a gebildeten Walzenspalt zwischen die beiden Bahnen 10-0 und 12-0 wird die Schmelzkleberschicht 11a kontinuierlich mittels des Extruders 62 extrudiert und läuft als Streifen 11a-0 zwischen den beiden äußeren Lagen 10-0 und 12-0 ein. Gleichzeitig wird auf die der Deckschicht 12-0, die mit der Abdeckschicht 11c verbunden ist, zugewandten Verbindungsseite der Schmelzkleberschicht 11a im Einlaufbereich des Walzenspaltes der Walzen 56, 56a das feuchtigkeitsabsorbierende Polymer 11b in Pulver- oder Granulatform aus der Dosiervorrichtung 64 aufgestreut. Beim Durchlaufen des zwischen den Walzen 56, 56a gebildeten Walzenspaltes werden die Schichten 10-0, 12-0, 11a-0 und das Polymer 11b haftfest miteinander verbunden zu der Mehrschichtenbahn 1-0. Diese wird in Fertigungsrichtung F einer weiteren Erwärmungsstation 60 zugeführt, wo sie mittels der Heizeinrichtungen, beispielsweise IR-Strahlern, auf die erforderliche Verformungstemperatur erwärmt und dann nachfolgend mit den entsprechenden Werkzeugen 59, 59a zu den gewünschten Verpackungsschalen verformt und ausgestanzt wird. Es ist auch möglich, die plastifizierte Schmelzkleberschicht an Stelle des Extruders mittels einer Sprühvorrichtung unter Druck oder mit einer Vorrichtung nach Art einer Spritzpistole auf die Trägerschicht aufzubringen.

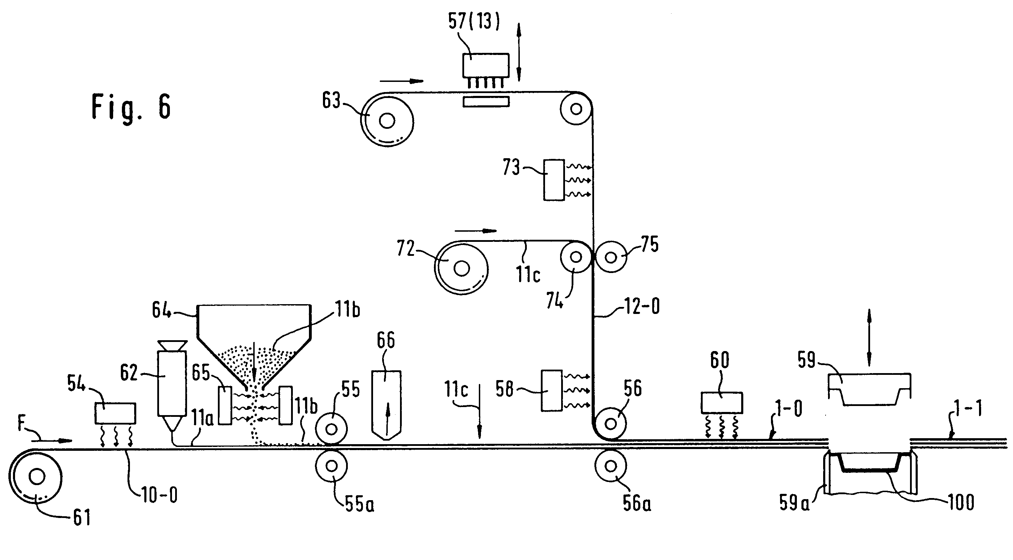

Bei der in der Figur 6 dargestellten Verfahrensweise wird die Mehrschichtenbahn 1-0 durch nacheinander Zusammenführen der einzelnen Schichten hergestellt. Hierbei wird die Trägerschichtbahn 10-0 von der Vorratsrolle 61 in Fertigungsrichtung F abgezogen, gegebenenfalls auf der Verbindungsseite mittels der Heizeinrichtung 54, wie IR-Strahlern, vorgewärmt und dann anschließend die Schmelzkleberschicht 11a mittels des Extruders 62 kontinuierlich aufextrudiert. Auf die noch plastifizierte gegebenenfalls mittels einer weiteren Heizeinrichtung zusätzlich erwärmte Oberfläche der Schmelzkleberschicht 11a wird dann mittels der Dosiervorrichtung 64 das feuchtigkeitsabsorbierende Polymer 11b in Granulat- oder Pulverform in der gewünschten Menge fortlaufend aufgebracht und nachfolgend mittels der Andrückwalzen 55, 55a beim Durchlaufen des von diesen gebildeten Walzenspaltes auf der Oberfläche der Schmelzkleberschicht verpreßt und gleichzeitig diese mit der Trägerschichtbahn 10-0 verpreßt, gegebenenfalls kann der Dosiervorrichtung 64 noch ein Heizschacht 65 nachgeordnet sein, in dem die vertikal durchfallenden Granulate und Pulver noch erwärmt werden, um besser auf der Oberfläche der Schmelzkleberschicht 11a anzuhaften. Dem Andrückwalzenpaar 55, 55a kann eine Absaugeinrichtung 66 nachgeordnet sein, mit Hilfe derer nicht anhaftendes Granulat oder Pulver der Polymere 11b abgesaugt wird. Anschließend wird die Deckschicht 12-0, wie bei Figur 4 beschrieben, zugeführt, wobei die Trägerschichtbahn mit der aufgebrachten Schmelzkleberschicht und Polymerschicht die Abdeckschicht 11c mit der Deckschicht 12-0 beim Durchlaufen des von den Walzen 56, 56a gebildeten Walzenspaltes zusammengeführt und miteinander anhaftend verpreßt werden. Nachfolgend erfolgt die Herstellung der Verpackungsschalen 100 aus der Mehrschichtenbahn 10-0, wie bei Figur 4 erläutert. Es ist auch möglich, den Vliesstreifen für die Abdeckschicht 11c nach der Absaugeinrichtung 66 auf die Polymerschicht 11b aufzubringen, wie der Pfeil 11c in Figur 6 andeutet.

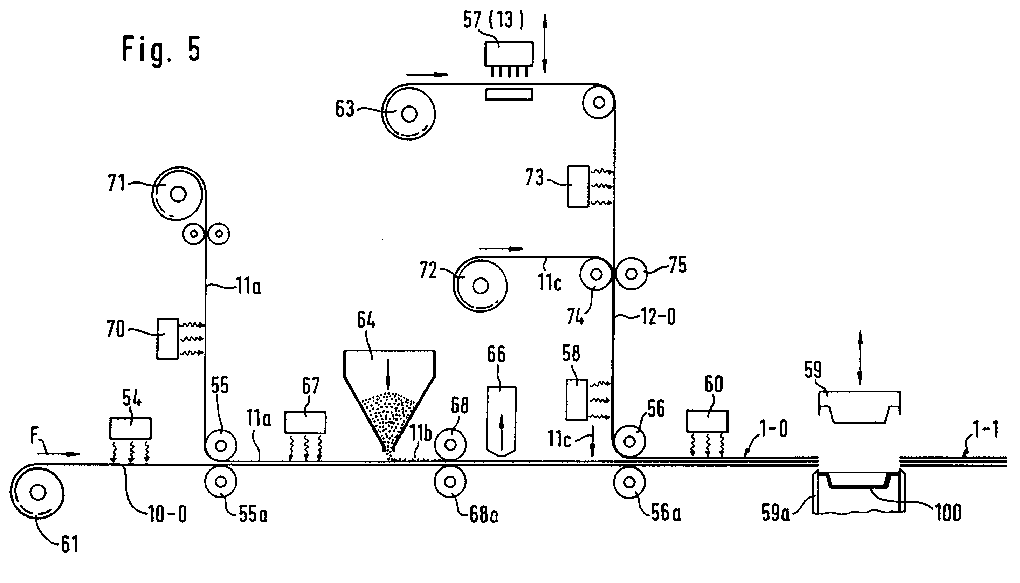

In der Figur 5 ist eine weitere Variante der Herstellung der mehrschichtigen Verpackungsschale dargestellt, bei der die Schmelzkleberschicht 11a in Gestalt eines vorgefertigten Folienbandes von einer Vorratsrolle 71 abgezogen und der Trägerschichtbahn 10-0 zugeführt wird. Hierbei werden bevorzugt die Verbindungsseiten der Trägerschichtbahn 10-0 und der Schmelzkleberschicht-Folie mittels Heizeinrichtungen, wie IR-Strahlern 54, 70, plastifiziert, so daß sie beim Zusammenführen in dem von den Walzen 55, 55a gebildeten Walzenspalt miteinander verkleben. Anschließend wird dann die Oberfläche der Schmelzkleberschicht 11a mittels einer Heizeinrichtung 67, wie IR-Strahlern, plastifiziert und dann unmittelbar auf diese plastifizierte Oberfläche das feuchtigkeitsabsorbierende Granulat 11b aus einer Dosiervorrichtung 64 aufgestreut und nachfolgend mittels eines Walzenpaares 68, 68a beim Durchlaufen durch den Walzenspalt angepreßt. Nicht anhaftendes Granulat kann wiederum mittels einer Absaugvorrichtung 66, die dem Walzenpaar 68, 68 a nachgeordnet ist, von der Schmelzkleberschicht abgesaugt werden. Anschließend erfolgt die Zuführung der Abdeckschicht 11c und der Deckschicht 12-0, wie bei Figur 6 beschrieben.

## Patentansprüche

1. Mehrschichtige Verpackungsschale mit haftfest miteinander verbundenen Schichten zur Aufnahme von Flüssigkeiten absondernden Lebensmitteln mit einer die Außenseite der Verpackungsschale bildenden flüssigkeitsundurchlässigen Trägerschicht aus kompaktem oder geschäumtem Kunststoff, mit einer die Innenseite der Verpackungsschale bildenden zumindest in örtlich begrenzten Bereichen flüssigkeitsdurchlässig ausgebildeten Deckschicht aus Kunststoff und mit einer zwischen der Trägerschicht und der Deckschicht ausgebildeten flüssigkeitsabsorbierenden Einlage aus einem nichtgewebten Vlies aus Mikrofasern und/oder Endlosfilamenten aus thermoplastischem Kunststoff, enthaltend Superabsorber, wobei die flüssigkeitsabsorbierende Einlage nur einen Teil der Fläche der Trägerschicht bedeckt und mit der Trägerschicht und der Deckschicht haftfest verbunden ist, **dadurch gekennzeichnet**, daß die flüssigkeitsabsorbierende Einlage aus einer auf die Trägerschicht (10) haftend aufgebrachten Schmelzkleberschicht (11a) aus Kunststoff, einer hierauf aufgebrachten und mit der Schmelzkleberschicht (11a) verklebten Schicht aus feuchtigkeitsabsorbierenden Polymeren (11b) in Partikelform mit einer Feuchtigkeitsaufnahme von mindestens 10 ml/g und dem hierauf als Abdeckschicht (11c) aufgebrachten nichtgewebten Vlies aus Mikrofasern und/oder Endlosfilamenten aus thermoplastischem Kunststoff besteht.

2. Verpackungsschale nach Anspruch 1, **dadurch gekennzeichnet**, daß als Schmelzkleber wasserunlösliche für den Lebensmittelbereich zugelassene physikalisch abbindende Kunststoffe auf Basis Styrol-Butadien-Copolymer, Ethylenvinylacetat-Copolymer, Polyvinylacetat, Polyester, Copolyester aliphatischer Diole oder Glykole oder Etheralkohole und aromatischer und/oder aliphatischer Dicarbonsäuren, wie Adipinsäure, Sebazinsäure, Phthalsäure, Terephthalsäure, eingesetzt sind.

3. Verpackungsschale nach einem der Ansprüche 1 bis 2, **dadurch gekennzeichnet**, daß die Schmelzkleberschicht (11a) in einer einen Auftrag von 20 bis 100 g/m² entsprechenden Schichtdicke vorgesehen ist.

4. Verpackungsschale nach einem der Ansprüche 1 bis 3, **dadurch gekennzeichnet**, daß als feuchtigkeitsabsorbierende Polymere thermoplastische verarbeitbare Biopolymere und/oder chemisch modifizierte Biopolymere und/oder synthetische Polymere mit einer Feuchtigkeitsaufnahme von mindestens 10 ml/g, vorzugsweise mindestens 25 ml/g, vorgesehen sind.

5. Verpackungsschale nach einem der Ansprüche 1 bis 4, **dadurch gekennzeichnet**, daß als feuchtigkeitsabsorbierende Polymere vernetzte Polyacrylsäuren, wie vernetzte Copolymerisate von Acrylsäuren mit bi- und polyfunktionellen Monomeren bzw. durch partielle Vernetzung mit mehrwertigen Ionen vernetzte Polyacrylsäuren und/oder Polyacrylate, insbesondere die Alkalimethallsalze der Polyacrylsäuren und/oder wasserunlösliche Polyacrylamide, wie durch Copolymerisation von Acrylamiden mit mehrfunktionellen Monomeren erhaltene wasserunlösliche Polymere vorgesehen sind.

6. Verpackungsschale nach einem der Ansprüche 1 bis 4, **dadurch gekennzeichnet**, daß als feuchtigkeitsabsorbierende Polymere Gummi arabicum und/oder Pfropf-Copolymere der Stärke, wie Stärke-Acrylamid-Acrylsäure-Pfropf-Copolymere und/oder Hydroximethylzellulose vorgesehen sind.

7. Verpackungsschale nach einem der Ansprüche 1 bis 5, **dadurch gekennzeichnet**, daß die Einlage geringe Mengen an Bakteriostatika enthält.

8. Verfahren zum Herstellen einer mehrschichtigen Verpackungsschale mit haftfest miteinander verbundenen Schichten zur Aufnahme von Flüssigkeiten absondernden Lebensmitteln, bei dem zum Bilden einer die spätere Außenseite der Verpackungsschale umfassenden Trägerschicht eine flüssigkeitsundurchlässige Bahn aus kompaktem oder geschäumtem Kunststoff und zum Bilden einer die spätere Innenseite der Verpackungsschale umfassenden Deckschicht eine zumindest in örtlich begrenzten Bereichen flüssigkeitsdurchlässige Bahn aus Kunststoff in einer der Trägerschicht entsprechenden Breite und zum Bilden einer flüssigkeitsabsorbierenden Einlage ein nichtgewebtes Vlies aus Mikrofasern und/oder Endlosfilamenten aus thermoplastischem Kunststoff, enthaltend Superabsorber in Streifenform mit einer geringeren Breite als der Breite der herzustellenden Verpackungsschale entspricht, vorgesehen werden und die hieraus gebildete Mehrschichtenbahn nach Erwärmung plastisch zu den Verpackungsschalen verformt wird, wobei die Schichten und die Einlage haftfest miteinander verbunden werden, und danach die Verpackungsschalen aus der Mehrschichtenbahn ausgeschnitten werden, **dadurch gekennzeichnet**, daß zum Bilden dem feuchtigkeitsabsorbierenden Einlage eine Schicht eines Schmelzklebers (11a) mit einer geringeren Breite als der Breite der herzustellenden Verpackungsschale entspricht fortlaufend auf die die Trägerschicht (10) bildenden Bahn (10-0) aufgebracht wird, auf die Schmelzkleberschicht (11a-0) eine Schicht aus feuchtigkeitsabsorbierenden Polymeren (11b) aus thermoplastisch verarbeitbaren Biopolymeren und/oder chemisch modifizierten Biopolymeren und/oder synthetischen Polymeren mit einer Feuchtigkeitsaufnahme von mindestens 10 ml/g, vorzugsweise mindestens 25 ml/g in Granulat- oder Pulverform aufgetragen wird und diese Polymerschicht (11b) mit dem Vliesstreifen (11c-0) mit einer etwa der Breite der Schmelzkleberschicht entsprechenden Breite als Abdeckschicht (11c) abgedeckt wird.

9. Verfahren nach Anspruch 8,
**dadurch gekennzeichnet**, daß die Schmelzkleberschicht (11a) im plastifizierten Zustand fortlaufend auf die Trägerschichtbahn (10-0) durch Extrusion aufgebracht wird.

10. Verfahren nach Anspruch 8 oder 9, **dadurch gekennzeichnet**, daß feuchtigkeitsabsorbierendes Polymergranulat bzw. -pulver auf die zumindest oberflächlich erwärmte und plastifizierte Schmelzkleberschicht aufgestreut wird und dann die feuchtigkeitsabsorbierenden Polymerpartikel an die Schmelzkleberschicht angepreßt werden und danach gegebenenfalls nicht an der Schmelzkleberschicht anhaftende Polymerpartikel abgesaugt werden.

11. Verfahren nach einem der Ansprüche 8 bis 10, **dadurch gekennzeichnet**, daß die Trägerschichtbahn und die Deckschichtbahn und der die Abdeckschicht bildende Vliesstreifen in einen von einem Walzenpaar gebildeten Walzenspalt einlaufen und die Schmelzkleberschicht in plastifiziertem Zustand zwischen die beiden äußeren Bahnen fortlaufend in den Walzenspalt eingebracht wird, gleichzeitig auf der der Abdeckschicht und Deckschicht zugewandten Seite der Schmelzkleberschicht die feuchtigkeitsabsorbierenden Polymer-Partikel vor dem Einlaufen in den Walzenspalt aufgetragen werden.

12. Verfahren nach einem der Ansprüche 8 bis 11, **dadurch gekennzeichnet**, daß für die Trägerschicht eine Bahn aus Polystyrolschaumfolie eingesetzt wird, auf die eine Schmelzkleberschicht fortlaufend als Streifen aus lebensmittelrechtlich zugelassenen Copolyestern aliphatischer Diole oder Glykole oder Etheralkohole und/oder aromatischer und/oder aliphatischer Dicarbonsäuren, wie Adipinsäure, Sebazinsäure, Phthalsäure, Terephthalsäure mit einer Schmelztemperatur unter vorzugsweise 150°C in einer Schichtdicke von 20 bis 100 g/m² extrudiert wird und hierauf fortlaufend lebensmittelrechtlich zulässige feuchtigkeitsabsorbierende Polymer-Partikelchen gemäß Anspruch 5 oder 6 in Pulverform mit einer Körnung im Bereich von 50 bis 1000 µm auf die noch plastifizierte Schmelzkleberschicht gestreut und angedrückt werden, gegebenenfalls nicht anhaftendes Pulver abgesaugt wird und dann eine Abdeckschicht aus einem nichtgewebten Vlies aus Endlosfilamenten und/oder Mikrofasern aus dem gleichen thermoplastischen Kunststoff wie die Trägerschicht und die Deckschicht bestehend mit einem Flächengewicht von 15 bis 50 g/m² mit einer einer zum Abdecken der Schmelzkleberschicht ausreichenden Breite aufgelegt und hierauf eine Deckschicht in der flächenmäßigen Ausdehnung der Trägerschicht aus einer gelochten kompakten oder geschäumten Polystyrolfolie aufgelegt wird, wobei gegebenenfalls die miteinander zu verbindenden Seiten insbesondere der Trägerschicht und der Deckschicht erwärmt werden, und diese Schichten zu einer Mehrschichtbahn verpreßt werden, aus der nach Erwärmung bis in den verformbaren plastischen Zustand die Verpackungsschalen geformt und ausgestanzt werden.
